**Europäisches Patentamt**

(19) **European Patent Office**

**Office européen des brevets**

(11) Veröffentlichungsnummer: **0 126 407**

**B1**

(12) **EUROPÄISCHE PATENTSCHRIFT**

(45) Veröffentlichungstag der Patentschrift:
16.12.87

(51) Int. Cl.⁴: **C 10 B 53/00, C 10 L 5/46**

(21) Anmeldenummer: **84105482.8**

(22) Anmeldetag: **15.05.84**

(54) **Verfahren zur Gewinnung von verwertbarem Gas aus Müll durch Pyrolyse und Vorrichtung zum Durchführen des Verfahrens.**

(30) Priorität: **18.05.83 DE 3317985**
**30.12.83 DE 3347554**

(43) Veröffentlichungstag der Anmeldung:
**28.11.84 Patentblatt 84/48**

(45) Bekanntmachung des Hinweises auf die Patenterteilung:
**16.12.87 Patentblatt 87/51**

(84) Benannte Vertragsstaaten:
**FR GB IT SE**

(56) Entgegenhaltungen:
**DE-A-2 202 979**
**DE-A-2 510 465**
**DE-A-2 844 741**
**FR-A-748 753**
**FR-A-2 354 523**
**US-A-3 997 407**
**US-A-4 042 345**
**US-A-4 142 867**

(73) Patentinhaber: **PKA Pyrolyse Kraftanlagen GmbH, Wöhrstrasse 13, D-7080 Aalen (DE)**

(72) Erfinder: **Fähnle, Erich, Ing. (grad.), Himmlingerweg 43, D-7080 Aalen/Unterkochen (DE)**

(74) Vertreter: **Lorenz, Werner, Dipl.- Ing., Fasanenstrasse 7, D-7920 Heidenheim (DE)**

LIBER, STOCKHOLM 1987

## Beschreibung

Die Erfindung betrifft eine Verfahren zur Gewinnung von verwertbarem Gas aus Müll durch Pyrolyse, wobei der zerkleinerte Müll in eine gasdicht abgeschlossene beheizte Schweltrommel eingebracht wird in der Schwelgase erzeugt und von den Reststoffen wie Asche und andere Kleinteile abgetrennt wird, und wobei das erzeugte Schwelgas in einem Gaswandler unter Zufuhr von Luft und in Gegenwart eines glühenden Kohlebettes in Brenngas zerlegt wird.

Ein derartiges Verfahren und eine Anlage hierzu ist z. B. in der DE-PS-24 32 504 beschrieben. Bei der Pyrolyse von Müll aus Haushaltungen, Gewerbe und Industrie werden in bekannter Weise die in den Abfällen enthaltenen organischen Bestandteile sowohl entgast als auch vergast. Das dabei gewonnene Gas wird in anschließenden Prozessen soweit nachbehandelt, daß es zum Antrieb von Gasturbinen und Gasmotoren verwendet werden kann. Ebenso ist auch eine Verwendung in der chemischen Industrie als Synthesegas zu neuen Produkten oder zur Abwärmenutzung, als By-pass für Kesselanlagen oder für den Betrieb von Blockheizkraftwerken möglich.

Zur Schwelgaserzeugung dient dabei im allgemeinen eine horizontal liegende Schweltrommel, die unter einem leichten Neigungswinkel um ihre Längsachse rotiert. Die Schweltrommel ist gasdicht ausgeführt und wird auf einer Temperatur von ca. 450° - 600°C unter Ausschluß von Sauerstoff durch eine indirekte Beheizung gehalten. Die Trommel wird bisher normalerweise mit geshreddertem Müll beschickt. Die Gasdichtheit wird dabei durch entsprechende Schleusensysteme an beiden Enden erreicht, wobei im allgemeinen diskontinuierlich gearbeitet wird. Bei den genannten Temperaturen erfolgt unter weitgehendem Ausschluß von Sauerstoff eine vollkommene Verschwelung auch schwieriger Stoffe. Die übrigbleibenden Reststoffe bestehen aus Asche, Metallen, Glas, ausgegasten Holz- und Kohleresten, sogenanntem Schwelkoks.

Das dabei gewonnene Schwelgas wird anschließend im allgemeinen in einem Gaswandler oder Reaktor weiterbehandelt. Dabei erfolgt durch einen teilweisen Abbrand eine Aufheizung auf eine Cracktemperatur von 11000 bis 1200°C. Bei der Crackung werden die langkettigen Kohlenwasserstoffe zu Methan und Wasserstoff und andere einfache Kohlenwasserstoffe umgeformt. Gleichzeitig erfolgt eine Teilaufspaltung des in Dampfform im Schwelgasgemisch enthaltenen Wassers in Wasserstoff und Sauerstoff. Während der Dissoziation durchströmen die Gase ein glühendes Kohlebett, in dem alle Folgereaktionen ablaufen. Das dabei entstehende Gasgemisch verläßt den Gaswandler und wird im allgemeinen nach einer Gaskühl- und Gaswaschanlage verwertet.

Die Vorbehandlung des Mülles und dessen Eingabe in die Schweltrommel sowie auch der Austrag der Reststoffe führte jedoch oft zu Schwierigkeiten bzw. war unbefriedigend. So wurde bisher im allgemeinen der angefahrene Müll durch Hüllshredder grob zerkleinert, von wo er über entsprechende Förderbänder in einen Zwischenbunker gelangte. Von dort aus wurde der zerkleinerte Müll entsprechend dem Bedarf über einen großen Trichter, der auch den Einlaß der Schweltrommel luftdicht abschloß, in diese eingeführt.

Ein erheblicher Nachteil bei dem bekannten Verfahren liegt jedoch darin, daß aufgrund der Feuchtigkeit des Mülles eine erhebliche Menge Abwasser entsteht, welches im allgemeinen in der Gaskühl- und Gaswaschanlage anfällt. Die Menge kann dabei mehr als 0,5 Kubikmeter Abwasser pro Tonne Müll betragen. Da dieses Abwasser mit Schadstoffen angereichert ist, ist hier eine sehr kostenintensive Reinigung und Neutralisation erforderlich. Weiterhin ist aufgrund des hohen Wassergehaltes in dem Müll zu dessen Verschwelung ein hoher Energiebedarf erforderlich, weshalb im allgemeinen eine ständige indirekte Beheizung der Schweltrommel zur Aufrechterhaltung des Schwelprozesses nötig ist.

Ein weiterer Nachteil der bekannten Verfahren und Anlagen besteht darin, daß aufgrund der Zwischenlagerung des geshredderten Mülles bereits ein Zersetzungsprozeß beginnt, wodurch bei längerer Lagerung wertvolle im Müll enthaltene Energie verloren geht.

Nachteilig bei den bekannten Anlagen ist weiterhin auch, daß in dem geshredderten Müll noch spinnende Verunreinigungen, wie z. B. Damenstrümpfe, Schnüre, Kunststoffstreifen und dgl. vorhanden sind, die zu Störungen führen, weil sie zum Teil in den Zuführeinrichtungen hängenbleiben und sich um drehende Teile wickeln. Probleme bereitet auch bei den bekannten Anlagen der Austrag der Reststoffe aus der Schweltrommel. Diese Reststoffe fallen mit einer Temperatur von 450° bis 600°C an und sind mehr oder weniger staubtrocken. Dadurch gestaltet sich deren Abtransport schwierig. So war man z. B. gezwungen den Reststoff extra anzufeuchten, damit er nicht während des Transportes oder auf der Deponie wegen seiner leichten Flugfähigkeit zu einer Umweltbelastung wurde.

Der vorliegenden Erfindung liegt daher die Aufgabe zugrunde, ein umweltfreundliches und energiesparendes Verfahren zur Gewinnung von verwertbaren Gas aus Müll durch Pyrolyse und eine Vorrichtung zur Durchführung des Verfahrens zu schaffen, mit dem weiterhin auch ein weitgehend störungsfreier und automatisierbarer Betrieb möglich ist, insbesondere wobei auch eines der Hauptprobleme bei der Müllpyrolyse, nämlich der sehr hohe Abwasseranfall, beseitigt wird.

Erfindungsgemäß wird nunmehr nicht ein Gemisch aus mehr oder weniger grobgeschreddertem Müll verwendet, sondern durch eine Pressvorrichtung, die von einer bekannten Bauart sein kann, wird der Müll in kleine Granulate geformt. Dieses Verfahren bringt unerwartete Vorteile.

Zum einen werden während des Pressverfahrens aufgrund der entstehenden Reibungswärme so hohe Temperaturen erreicht, daß die Bakterien vernichtet werden, und zum anderen erhält man dabei Granulate mit einem hohen Trockengehalt.

Ein weiterer Vorteil besteht darin, daß der Eintrag der Granulate in die Schweltrommel zu keinen Schwierigkeiten mehr führt, denn es sind keine spinnenden Verunreinigungen vorhanden.

Bei der erfindungsgemäßen Granulatgröße mit ungefähr 1 bis 50 mm, vorzugsweise 2 bis 10 mm wird eim sehr guter Aufschluß und damit eine gute Entgasung erreicht, was zu einem hohen Wirkungsgrad führt. Außerdem sind dabei u. a. auch Glas, Steine, Metallteile und dgl. so stark verkleinert, daß sie das Verfahren nicht mehr stören, sofern man diese Teile nicht bereits vor der Presse aussortiert. Weiterhin bedeutet diese Beschickungsform für die Schweltrommel auch, daß deren Einlaßbereich einfacher und damit kostengünstiger ausgestaltet werden kann. So ist z. B. kein großer Trichter mehr erforderlich. Die Granulate können zum Luftabschluß durch eine Zellenradschleuse in die Schweltrommel eingegeben werden, wobei diese zur Regel ung der Fördermenge mit einem Regelgetriebemotor versehen sein kann.

In der DE-PS-25 10 465 ist zwar bereits ein Verfahren zur Müllbeseitigung durch Pyrolyse beschrieben, wobei zur Zerfaserung von Papieranteilen nach einer Grobzerkleinerung des Mülles auf Stückgrößen von 5 bis 10 cm eine Feinzerkleinerung mit Hammermühlen vorgenommen wird. Die Feinzerkleinerung soll jedoch in einem feuchten Zustand von mindestens 30 bis 40 % Feuchtigkeit erfolgen, wobei gegebenenfalls sogar noch Wasser oder eine anderer Wasser enthaltender Abfall zugegeben werden soll.

In der US-PS-4 042 345 ist ein Verfahren zur Wiederaufbereitung von Abfall beschrieben wobei Pellets mit einer Größe von 10 bis 15 cm gebildet werden sollen, die bestimmte Oberflächen- und Volumenverhältnisse aufweisen sollen. Außerdem sollen diese Pellets unter hohem Druck verdichtet werden.

Derartige Pellets sind jedoch für das erfindungsgemäße Verfahren sowohl bezüglich ihrer Feuchtigkeit als auch ihrer Größe nicht geeignet.

Der Müll kann bei der Granulierung durch die Pressung auf einen Trockensubstanzgehalt von mehr als 80 % gebracht werden, wobei in einer sehr vorteilhaften Weiterbildung des erfindungsgemäßen Verfahrens in einer Nachtrocknungsstrecke die Granulate auf einen Trockensubstanzgehalt von mehr als 84 % gebracht werden. Dies kann z. B. durch Ausnutzung der bei der Pressung erzeugten

Heißbrüdendämpfe über einen entsprechenden Wärmeaustausch erfolgen.

Dies bedeutet daß man die Granulate in diesem Zustand gegebenenfalls monatelang lagern kann, ohne daß eine Zersetzung auftritt und damit praktisch überhaupt kein Abwasser und somit keine Umweltbelastung entsteht, denn die Restfeuchtigkeit wird weitgehend von dem Schwelgas aufgenommen bzw. bei der Crackung des Schwelgases verbraucht.

In vorteilhafter Weise wird der Schweltrommel in einem Trommelinnenraumtemperaturbereich unter 500° C dosiert ein Sauerstoffträger (Luft) für eine unterstöchiometrische Verbrennung eines Teiles des Schwelgutes zugeführt, wobei die Zufuhr des Sauerstoffträgers so gesteuert wird, daß durch die dabei gewonnene Wärme eine Schweltemperatur zwischen 500 und 600° C erreicht und/oder aufrechterhalten wird.

Durch diese Maßnahme läßt sich auf einfache Weise Energie einsparen, denn erfindungsgemäß wird die Verbrennungswärme als Energie verwendet.

Ebenso kann in vorteilhafter Weise in oder nach der Schweltrommel dosiert Wasser oder Dampf zur Steuerung des Feuchtigkeitsgehaltes des bei der Verschwelung entstehenden Gasgemisches zugegeben werden. Im Bedarfsfalle kann dabei das Wasser aus einem Überlauf einer dem Gaswandler nachgeschalteten Gaskühl- und Wascheinrichtung verwendet werden, wodurch eine gesonderte Wasserzuführung entfallen kann.

Zur weiteren Energieeinsparung bei der Beheizung der Schweltrommel kann im Bedarfsfall auch das den Gaswandler verlassende heiße Brenngas zur indirekten Beheizung der Schweltrommel verwendet werden. Dies kann z. B. durch einen Gasbrenner erfolgen, welche durch das Brenngas betrieben wird und welcher die im Kreislauf über ein Rohrsystem durch das Innere der Schweltrommel geführten Heizgase aufheizt. Ebenso kann das ca. 500 bis 600° C heiße Brenngas, das sowieso abgekühlt werden muß, im Wärmeaustausch mit den Heizgasen für die Schweltrommel zu deren Wiederaufheizung eingesetzt werden.

Zur Pressung des Mülles zu Granulaten kann eine Thermoschneckenpresse verwendet werden.

Eine weitere sehr vorteilhafte konstruktive Ausgestaltung der Erfindung, die auch unabhängig von der Form der Müllzugabe ist, besteht darin, daß im Auslaß der Schweltrommel eine Austragsfördereinrichtung für die Reststoffe angeordnet ist, an die ein Wasserbad angeschlossen ist, welches mit einer Austragseinrichtung für die Reststoffe versehen ist.

Während bisher die Reststoffe über eine Zellenradschleuse aus der Schweltrommel entfernt wurden, erfolgt dies erfindungsgemäß nunmehr über ein Wasserbad und eine daran sich anschließende Austragseinrichtung. Dies bedeutet, daß keine trockene Asche mehr vorliegt, sondern daß die Reststoffe entsprechend naß sind und damit leicht deponierbar werden. Gleichzeitig wird durch das Wasserbad der erforderliche Luftabschluß gegenüber dem Inneren der Schweltrommel erreicht.

Die Austragsfördereinrichtung kann auf verschiedene Weise ausgestaltet sein. Wesentlich ist lediglich, daß die Reststoffe unter die Wasseroberfläche des Wasserbades gedrückt werden, weil z. B. Asche auf der Wasseroberfläche schwimmen würde. Anschließend werden die unter die Wasseroberfläche gedrückten Reststoffe über die Austragseinrichtung ausgetragen.

Für diese Zwecke kann z. B. eine Austragsschnecke am Ende der Schweltrommel angeordnet sein, an die sich eine nach unten gerichtete Stopfschnecke anschließt, deren vorderes Ende unter die Wasseroberfläche des Wasserbades ragt. Dabei wird man in vorteilhafter Weise die Stopfschnecke annähernd senkrecht nach unten richten, damit die Gefahr von Verstopfungen vermieden wird. Durch diese Anordnung fallen nämlich die kleinen Reststoffe aufgrund der Schwerkraft nach unten, und es ist lediglich erforderlich die sonst aufschwimmenden Reststoffe durch die Stopfschnecke unter Wasser zu drücken.

Die Austragseinrichtung kann als Transportschnecke ausgebildet sein, deren Einlaß unter der Wasseroberfläche des Wasserbades im Bereich des Auslaßes der Stopfschnecke liegt und deren Auslaß oberhalb der Wasseroberfläche des Wasserbades angeordnet ist.

Für einen einwandfreien Transport ist es von Vorteil, wenn die Träger der Schnecken mit Mitnehmerleisten versehen werden, und die Austragsschnecke am Ende der Schweltrommel mit Schneckenflügeln mit immer enger werdender Steigung ausgerüstet wird.

Durch diese Ausgestaltung findet im ersten Bereich der Schnecke eine lockere Förderung statt, zumal in diesem Bereich auch im allgemeinen der Gasabzug liegen wird, während anschließend eine gewisse Verdichtung für eine einwandfreie Weitergabe an die Stopfschnecke stattfindet.

Nachfolgend ist anhand der Zeichnung ein Ausführungsbeispiel der Erfindung prinzipmäßig beschrieben.

Es zeigt:

Fig. 1 eine Draufsicht auf eine erfindungsgemäße Anlage;

Fig. 2 eine Seitenansicht nach der Linie II - II der Fig. 1;

Fig. 3 eine Seitenansicht nach der Linie III - III der Fig. 1;

Fig. 4 eine Ansicht nach der Linie IV - IV der Fig. 1;

Fig. 5 und 6 vergrößerte Darstellungen des Mülleintrages in die Schweltrommel;

Fig. 7 und 8 vergrößerte Darstellungen des Austrages des Mülles aus der Schweltrommel.

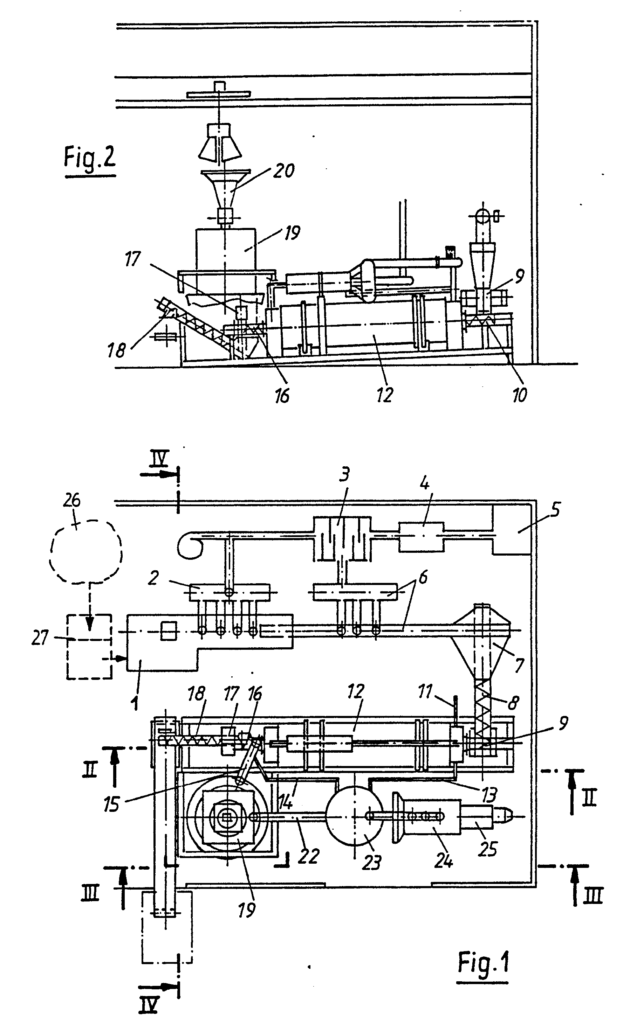

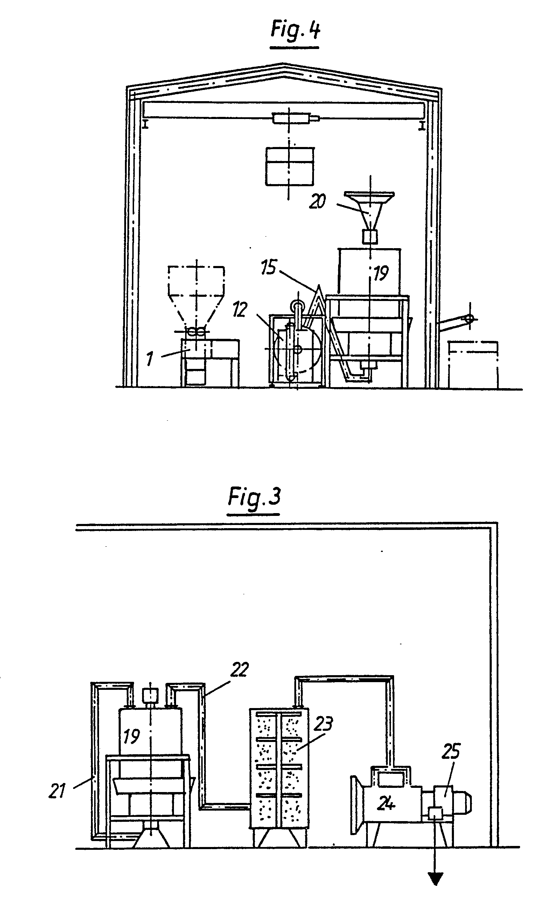

In den Fig. 1 bis 4 ist der prinzipmäßige Aufbau der Anlage dargestellt. Anhand dieser Figuren werden auch die einzelnen Verfahrensschritte erläutert.

Haus- und hausmüllähnlicher Industriemüll oder dgl. wird in eine Mehrkammerthermoschneckenpresse 1 eingebracht, nachdem ggf. zuvor ein Teilrecycling von Metallen, Glas und anderen verwertbaren Stoffen vorgenommen wird bzw. ggf. auch nach einem Ausscheiden der Schwerfraktion. In der Thermoschneckenpresse 1 wird durch Reibungspressung bei ca. 110° bis 150° C die Zerkleinerung des Mülles in Granulate von einer Größe von ca. 1 bis 50 mm vorgenommen. Das dabei entstehende Brüdenwasser (Wasserdampf, der dem Müllgranulat entweicht) wird über einen Brüdenabzug 2 und einen Wärmetauscher 3 zu dessen Abkühlung und Verwertung der Wärmeenergie über einen Filter 4 einer Kondensiereinrichtung 5 zugeführt. Anschließend kann dieses Wasser in die nächste Kläranlage geleitet werden, sofern es nicht an irgendeiner Stelle im Kreislauf verwendet wird. Der Müll, welcher vor der Thermoschnecke 1 in der Regel je nach Umfeldbedingungen einen Trockensubstanzwert von ca. 50 % bis 65 % aufweist, wird in der Thermoschnecke auf einen Trockensubstanzwert von mindestens 70 % gebracht. Das aus der Thermoschneckenpresse 1 weitergeförderte Granulat wird in einer Nachtrocknungseinrichtung 6 auf einen Trockensubstanzwert von mindestens 84 % gebracht. Hierzu wird die bei der Pressung in der Thermoschneckenpresse 1 entstandene Abwärme bzw. werden die Brüdendämpfe in dem Wärmetauscher 3 verwendet.

Das sich hieraus ergebende Granulat ist weitgehendst geruchsfrei und kann auch ohne Zersetzung längerfristig zwischengelagert werden. Über einen Zwischenbunker 7 und eine Förderschnecke 8 gelangt das Granulat dann in eine Zellenradschleuse 9. Die Zellenradschleuse 9 stellt einen luftdichten Einlaß dar wobei eine nachgeschaltete Eintragsschnecke 10 das Granulat in eine Schweltrommel 12 fördert. Um unterstöchiometrische Verbrennungsvorgänge zu ermöglichen, ist eine Luftdosierungsleitung 11 für die Schweltrommel 12 vorgesehen. Zur Steuerung des Feuchtigkeitsgehaltes des entstehenden Schwelgases dienen Wasser- oder Dampfdosierungsleitungen 13 und 14, welche in den Einlaßbereich der Schweltrommel 12 bzw. in den Austragsbereich oder kurz dahinter einmünden. In eine Zuleitung zur Schweltrommel 12 können z. B. zur Altölbeseitigung auch Altöle oder sonstige Sondermüllfraktionen zur schadlosen Beseitigung in bestimmter Dosierung, ebenso wie auch andere vorentwässerte organische Stoffe zugemischt werden.

Die Schweltrommel 12 ist indirekt beheizt und rotiert langsam mit leichtem Neigungswinkel zum Austrag hin um ihre Längsachse. Das Granulat verschwelt in der Trommel bei einer Temperatur von 450° bis 600° C. Die zur Beheizung der Trommel erforderliche Wärme stammt in der Anheizphase aus einem Öl- oder Gasbrenner, danach z. B. aus einer Zweigleitung des Gaswandlers zur indirekten Beheizung bzw. aus dem unterstöchiometrischen Verbrennungsprozeß durch eine dosierte Luftzuführung über die Luftdosierungsleitung 11 in der Trommel selbst. Die indirekte Beheizung der Trommel erfolgt durch Heizgase mit einer Temperatur von ca. 600°C, welche durch ein in der Trommel eingebautes Röhrensystem, das sich in Längsrichtung durch die Trommel erstreckt, geführt wird. Dabei geben die Heizgase über die Rohrwandung ihre Wärme an das Schwelgut in der Trommel ab. Die abgekühlten Heizgase werden anschließend mit entsprechender Aufheizung im Kreislauf geführt.

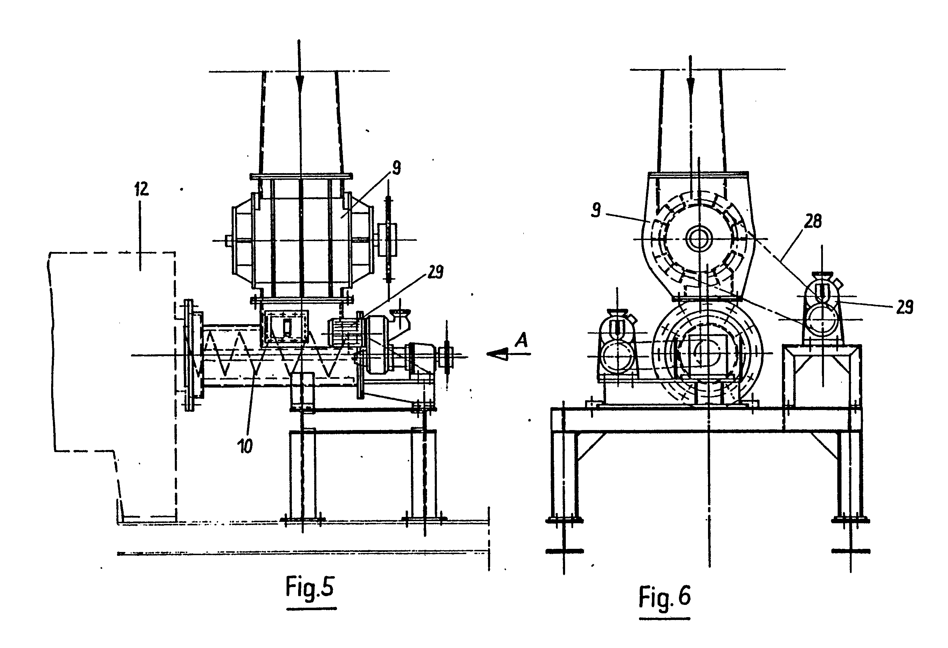

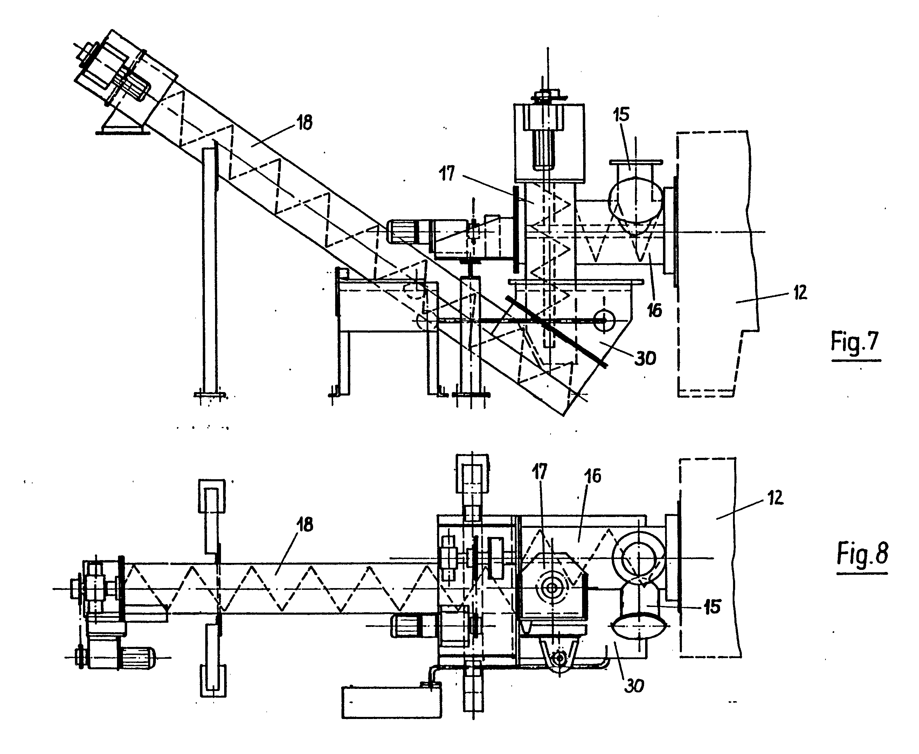

Das entstandene Schwelgas wird über einen Schwelgasabzug 15 aud der Trommel nach oben abgesaugt und mit einer Temperatur von ca. 400° bis 500°C einem Gaswandler 19 zugeführt. Die entschwelten Reststoffe werden mittels eines luftdichten Fördersystemes ebenfalls aus der Schweltrommel 12 ausgetragen. Hierzu dient eine Austragsschnecke 16, an die sich eine senkrecht nach unten gerichtete Stopfschnecke 17 anschließt. Die Stopfschnecke mündet in ein Wasserbad und über eine Transportschnecke 18, die mit ihrem Einlaß ebenfalls unter der Wasseroberfläche liegt und schräg nach oben aus dem Wasserbad herausführt, werden die angefeuchteten Reststoffe nach außen transportiert, wo sie z. B. auf eine Deponie gefahren werden können. Die Mülleintragsvorrichtung in die Schweltrommel 12 wird in den Fig. 5 und 6 und der Austrag aus der Schweltrommel wird in den Fig. 7 und 8 in vergrößerter Darstellung gezeigt und an späterer Stelle näher erläutert.

In dem Gaswandler 19 erfolgt die Aufarbeitung bzw. Umwandlung des Schwelgases in Verbindung mit einem Kohlebett. Hierzu erhält der Gaswandler 19 über eine Kokszuführung 20 entsprechend Kohle bzw. Koks. Über eine Warmluftleitung 21 wird heiße Luft in den Gaswandler 19 eingebracht. Aufbau und Wirkungsweise eines derartigen Gaswandlers sind hinreichend bekannt, weshalb nachfolgend nicht näher darauf eingegangen wird. Das Brenn- bzw. Generatorgas wird über eine Brenngasleitung 22 aus dem Gaswandler 19 entnommen und einem Gaswäscher und Kühler 23 zugeführt. Das Gas ist nunmehr energetisch angereichert und von langkettigen Kohlenwasserstoffen befreit. In dem Gaswäscher und Kühler 23 wird das Gas zum großen Teil von mitgeführten Stäuben gereinigt und dessen Temperatur wird soweit abgesenkt, daß das gekühlte und ausgewaschene Reingas mit ca. 40°C von einem Gasmotor 24 zu dessen Betrieb angesaugt werden kann. Der Gasmotor 24 ist zur Energieerzeugung mit einem Generator 25 verbunden.

Wie in der Fig. 1 gestrichelt dargestellt ist, wird man im allgemeinen einen angefahrenen Müllhaufen 26 im Bedarfsfalle zuerst in einem Shredder 27 grob zerkleinern, bevor er der Thermoschneckenpresse 1 zugeführt wird. Selbstverständlich kann jedoch auch - je nach Müllart - der Müll direkt in die Thermoschneckenpresse 1 eingebracht werden.

In den Fig. 5 und 6 ist die Eintragseinrichtung für die Granulate in die Schweltrommel 12 vergrößert dargestellt. Dabei zeigt die Fig. 5 eine Seitenansicht und die Fig. 6 eine Frontansicht. Die Zellenradschleuse 9 wird über einen Kettenantrieb 28 von einem Regelantrieb 29 aus angetrieben, wodurch die Eintragsmenge entsprechend geregelt werden kann. Die Fig. 6 zeigt dabei die Ansicht des Eintragsbereiches aus der Pfeilrichtung A in der Fig. 5.

Die Fig. 7 zeigt den Austrag aus der Schweltrommel in Seitenansicht in vergrößerter Darstellung und die Fig. 8 die Draufsicht hierzu. Die Gänge bzw. Mitnehmer der Austragsschnecke 16 für den Pyrolysekoks sind im hinteren Bereich in einem geringeren Abstand voneinander angeordnet als im vorderen Bereich. Auf diese Weise erfolgt gegen Ende eine Verdichtung der Reststoffe, welche dann von der Stopfschnecke 17 weitertransportiert werden. Die Stopfschnecke 17 ragt mit ihrer Längsachse senkrecht nach unten. Das untere Ende der Stopfschnecke 17 mündet in ein Wasserbad 30, das durch einen entsprechenden Behälter gebildet ist. Durch den Mitnehmer der Stopfschnecke 17 werden die Reststoffe unter die Wasseroberfläche des Wasserbades 30 gedrückt von wo aus sie durch die Transportschnecke 18 übernommen werden. Die Transportschnecke 18 liegt wie ersichtlich mit dem Einlaß ebenfalls unter der Wasseroberfläche des Wasserbades 30 und weist eine schräg nach oben führende Achse auf. Zur Einhaltung eines bestimmten Wasserstandes in dem Wasserbad 30 wird eine entsprechende Niveaustandsanzeigeeinrichtung und eine Nachfüllvorrichtung eingebaut.

**Patentansprüche**

1. Verfahren zur Gewinnung von verwertbarem Gas aus Müll durch Pyrolyse, wobei der zerkleinerte Müll in eine gasdicht abgeschlossene beheizte Schweltrommel eingebracht wird, in der Schwelgase erzeugt und von den Reststoffen, wie Asche und andere Kleinteile abgetrennt wird, und wobei das erzeugte Schwelgas in einem Gaswandler unter Zufuhr von Luft und in Gegenwart eines glühenden Kohlebettes in Brenngas zerlegt wird, dadurch gekennzeichnet, daß der Müll zu Granulat in einer Größe von 1 bis 50 mm geformt und in dieser Form in die Schweltrommel (12) mit einem Trockensubstanzgehalt von mindestens 80 % eingeschleust wird.

2. Verfahren nach Anspruch 1, dadurch gekennzeichnet, daß das Granulat unter Verwendung der bei der Pressung erzeugten heißen Brüdendämpfe durch deren Wärmeaustausch mit Luft in einer Nachtrocknungsstrecke auf einen Trockensubstanzwert von mehr als 84 % gebracht wird.

3. Verfahren nach einem derAnsprüche 1 und 2, dadurch gekennzeichnet , daß der Schweltrommel (12) in einem Trommelinnenraumtemperaturbereich unter 500°C dosiert ein Sauerstoffträger (Luft) für eine unterstöchiometrische Verbrennung eines Teiles des Schwelgutes zugeführt wird, wobei die Zufuhr des Sauerstoffträgers so gesteuert ist, daß durch die dabei gewonnene Wärme eine Schweltemperatur zwischen 500 und 600°C erreicht und/oder aufrechterhalten wird.

4. Verfahren nach einem der Ansprüche 1 bis 3, dadurch gekennzeichnet , daß in oder nach der Schweltrommel (12) dosiert Wasser oder Dampf zur Steuerung des Feuchtigkeitsgehaltes des bei der der Verschwelung entstehenden Gasgemisches zugegeben wird.

5. Verfahren nach Anspruch 4, dadurch gekennzeichnet , daß das Wasser aus einem Überlauf, einer dem Gaswandler (19) nachgeschalteten Gaskühl- und Wascheinrichtung (23) bzw. der Kondensiereinrichtung (5) in die Schweltrommel (12) oder in die der Schweltrommel nachgeschalteten Schwelgasleitung (15) zum Gaswandler (19) eingegeben wird.

6. Verfahren nach einem der Ansprüche 1 bis 5, dadurch gekennzeichnet , daß die den Gaswandler (19) verlassenden heißen Brenngase zur indirekten Beheizung der Schweltrommel (12) verwendet werden.

7. Vorrichtung zur Durchführung des Verfahrens nach einem der Ansprüche 1 bis 6 mit einer Müllzerkleinerungseinrichtung und mit einer indirekt beheizten Schweltrommel, die mit einem wenigstens annähernd gasdichten Einlaß, mit einem Auslaß für feste Reststoffe (Schwelkoks) und mit einer Schwelgasabzugsleitung versehen ist, dadurch gekennzeichnet , daß vor der Schweltrommel (12) eine Thermoschneckenpresse (1) zur Granulierung und gegebenenfalls eine Nachtrockeneinrichtung (6) angeordnet ist,

8. Vorrichtung nach Anspruch 7, dadurch gekennzeichnet , daß die Schweltrommel (12) am Einlaß mit einer Zellenradschleuse (9) versehen ist.

9. Vorrichtung nach Anspruch 7, dadurch gekennzeichnet , daß die Nachtrocknungseinrichtung (6) für die Granulate mit einem mit den Brüdendampfen der Thermoschneckenpresse (1) in Wärmeaustausch stehenden Wärmeaustauscher (3) versehen ist.

10. Vorrichtung nach Anspruch 7, dadurch gekennzeichnet , daß im Auslaß der Schweltrommel (12) eine gasdichte Austragsfördereinrichtung (16, 17) für die Reststoffe angeordnet ist, an die ein Wasserbad (30) angeschlossen ist, welches mit einer Austragseinrichtung (18) für die Reststoffe versehen ist.

11. Vorrichtung nach Anspruch 10, dadurch gekennzeichnet , daß die Austragsfördereinrichtung mit einer Austragsschnecke (1) und einer nachgeschalteten nach unten gerichteten Stopfschnecke (17) versehen ist, wobei das vordere Ende der Stopfschnecke unter die Wasseroberfläche des Wasserbades (30) ragt.

12. Vorrichtung nach Anspruch 10, dadurch gekennzeichnet , daß die Austragseinrichtung als Transportschnecke (18) ausgebildet ist, deren Einlaß unter der Wasseroberfläche des Wasserbades (30) im Bereich des Auslases der Stopfschnecke (17) liegt und deren Auslaß oberhalb der Wasseroberfläche des Wasserbades (30) angeordnet ist.

## Claims

1. Process for the extraction of utilisable gas from refuse by pyrolysis, in which the pulverised refuse is placed in a gas-tight heated carbonisation drum, in which carbonisation gases are produced and is separated from the residual substances, such as ash and other small parts, and in which the carbonisation gas produced is decomposed in a gas converter by air being supplied and in the presence of a red-hot bed of coal in fuel gas, characterised in that the refuse is formed to granulate in a size of 1 to 50 mm and in this form it is passed into the carbonisation drum (12) with a dry substance content of at least 80 %.

2. Process according to Claim 1, characterised in that the granulate is brought to a dry substance value of more than 84 % by using the hot vapours produced during compression by their heat exchange with air in an additional drying section.

3. Process according to one of Claims 1 and 2, characterised in that to the carbonisation drum (12) in a temperature range in the drum interior of below 500°C is supplied an oxygen carrier (air) in measured doses for sub-stoichiometric combustion of one part of the carbonisation material, the supply of the oxygen carrier being controlled so that a carbonisation temperature of between 500 and 600°C is attained and/or maintained by the heat produced in this way.

4. Process according to one of Claims 1 to 3, characterised in that in or behind the carbonisation drum (12) water or steam is added in measured quantities to control the moisture content of the gas mixture produced during low-temperature carbonisation.

5. Process according to Claim 4, characterised in that the water is supplied from an overflow of a gas cooling and washing appliance (23) connected at the outlet side to the gas converter (19) or from the condensation appliance (5) into the carbonisation drum (12) or into the carbonisation gas line (15) connected at the outlet side to the condensation drum and leading to the gas converter (19).

6. Process according to one of Claims 1 to 5, characterised in that the hot fuel gases leaving the gas converter (19) are used for the indirect heating of the combustion drum (12).

7. Apparatus for performing the process according to one of Claims 1 to 6 with a refuse crushing appliance and with an indirectly heated combustion drum, which is provided with an inlet which is at least almost gastight, with an outlet for solid residual substances (low-temperature coke) and with a combustion gas discharge line, characterised in that infront of the combustion drum (12) is disposed a thermal worm press (1) for the granulation and if necessary an additional drying appliance (6).

8. Apparatus according to Claim 7, characterised in that the combustion drum (12) is provided at the inlet with a bucket wheel sluice (9).

9. Apparatus according to Claim 7, characterised in that the additional drying appliance (6) for the granulates is provided with a heat exchanger (3) exchanging heat with the vapours of the thermal worm press (1).

10. Apparatus according to Claim 7, characterised in that in the outlet of the combustion drum (12) is disposed a gastight discharge transporter (16, 17) for the residual substances to which a water bath (30) is connected, which is provided with a discharge device (18) for the residual substances.

11. Apparatus according to Claim 10, characterised in that the discharge transporter is equipped with a discharge screw (16) and a plug screw (17) connected at the outlet side and pointing downwards, with the front end of the plug screw projecting under the water level of the water bath (30).

12. Apparatus according to Claim 10, characterised in that the discharge device is designed as a feed screw (18), the inlet of which lies under the water level of the water bath (30) in the region of the outlet of the plug screw (17) and the outlet of which lies above the water level of the water bath (30).

**Revendications**

1. Procédé pour produire par pyrolyse du gaz exploitable à partir d'ordures, dans lequel les ordures broyées sont introduites dans un tambour de distillation lente fermé de manière étanche aux gaz et chauffé, où du gaz de distillation est produit et séparé des matières restantes telles que des cendres et autres particules, et dans lequel le gaz de distillation obtenu est décomposé en gaz combustible dans un convertisseur de gaz avec apport d'air et en présence d'un lit de charbon brûlant, caractérisé en ce que les ordures sont formées en un granulat d'un module de 1 à 50 mm et sont introduites sous cette forme dans le tambour de distillation (12) avec une teneur en substances sèches d'au moins 80 %.

2. Procédé selon la revendication 1, caractérisé en ce que l'on porte le granulat à une teneur en substances sèches supérieure à 84 % dans un étage de séchage secondaire en utilisant les vapeurs produites par le pressage, grâce à un échange de leur chaleur avec de l'air.

3. Procédé selon l'une des revendications 1 ou 2, caractérisé en ce que, quand la température intérieure du tambour de distillation est inférieure à 500° C, on introduit dans le tambour (12) un porteur d'oxygène (air) en quantité dosée pour une combustion sous-stoechiométrique d'une partie du distillat, l'apport du porteur d'oxygène étant réglé de manière à atteindre et/ou maintenir une température de distillation comprise entre 500° C et 600° C au moyen de la chaleur ainsi obtenue.

4. Procédé selon l'une des revendications 1 à 3, caractérisé en ce qu'une quantité dosée d'eau ou de vapeur est introduite dans ou après le tambour de distillation (12) pour régler la teneur en humidité du mélange gazeux issu de la distillation.

5. Procédé selon la revendication 4, caractérisé en ce que l'eau, prélevée à la sortie d'un dispositif de refroidissement et de lavage de gaz (23) disposé en aval du convertisseur (19) ou à la sortie du dispositif condenseur (5), est introduite dans le tambour de distillation (12) ou dans la conduite de gaz de distillation (15) allant du tambour au convertisseur (19).

6. Procédé selon l'une des revendications 1 à 5, caractérisé en ce que les gaz combustibles chauds sortant du convertisseur (19) sont utilisés pour le chauffage indirect du tambour de distillation (12).

7. Installation pour la mise en oeuvre du procédé selon l'une des revendications 1 à 6, comportant un dispositif de broyage des ordures et un tambour de distillation chauffé indirectement qui est pourvu d'une entrée au moins approximativement étanche aux gaz, d'une sortie pour les matières solides restantes (coke de distillation, semi-coke) et d'une conduite d'extraction de gaz de distillation, caractérisé en ce qu'elle comporte en amont du tambour de distillation (12) une thermo-presse à vis (à chaud) (1) pour former le granulat et, le cas échéant, un dispositif de séchage secondaire (6).

8. Installation selon la revendication 7, caractérisée en ce que le tambour de distillation (12) comporte à son entrée un sas à roue cellulaire (9).

9. Installation selon la revendication 7, caractérisée en ce que le dispositif de séchage secondaire (6) pour les granulats est équipé d'un échangeur de chaleur (3) recevant la chaleur des vapeurs produites dans la presse à vis (1).

10. Installation selon la revendication 7, caractérisée en ce qu'elle comporte à la sortie du tambour de distillation (12) un dispositif d'extraction (16, 17) des matières restantes qui est étanche aux gaz et auquel est raccorde un bain d'eau (30) équipé d'un dispositif d'évacuation (18) des matières restantes.

11. Installation selon la revendication 10, caractérisée en ce que le dispositif d'extraction comporte une vis d'extraction (16) suivie d'une vis de bourrage (17) dirigée vers le bas, l'extrémité avant de la vis de bourrage s'étendant en dessous de la surface libre du bain d'eau (30).

12. Installation selon la revendication 10, caractérisée en ce que le dispositif d'évacuation est formé d'une vis transporteuse (18) dont l'entrée se trouve en dessous de la surface libre du bain d'eau (30) dans la zone de la sortie de la vis de bourrage (17), et dont la sortie se trouve en dessus de la surface libre du bain d'eau (30).

Fig.2

Fig.1

Fig. 4

Fig. 3

Fig.5

Fig. 6

0 126 407

Fig.7

Fig.8

0 126 407